# EUROPÄISCHE PATENTANMELDUNG

(11) **EP 1 453 282 A1**
(43) Veröffentlichungstag der Anmeldung: **01.09.2004**
(21) Anmeldenummer: 03004076.0
(22) Anmeldetag: 25.02.2003
(51) Int. Cl.: H04M 1/23, H04M 1/02, G06F 1/16

(54) **Anordnung zur Eingabe und insbesondere Texteingabe bei mobilen Geräten**

(71) Anmelder: SIEMENS AKTIENGESELLSCHAFT, 80333 München (DE)
(72) Erfinder: Bock, Gerhard, 82131 Gauting (DE)

(57) **Zusammenfassung**

Die Erfindung betrifft ein mobiles Endgerät (ME) mit einer Anzeigeeinrichtung (AE) und mit Eingabetasten (R1 bis R3). Erfindungsgemäß sind zumindest einige der Tasten (R2, R4) auf der Rückseite des Endgerätes (ME) in Bezug auf die Anzeigeeinrichtung (AE) angeordnet und zumindest ist ihre Position auf der Vorderseite des Endgerätes (ME) sichtbar.

## Beschreibung

Die Erfindung betrifft ein mobiles Endgerät gemäß dem Oberbegriff des Patentanspruchs 1.

Bei solchen mobilen Endgeräten, insbesondere wenn sie Datendienste ermöglichen, stellt sich immer wieder das Problem der Texteingabe. Alphatastaturen oder gar alphanumerische Eingabetasten sind zu groß, und die Darstellung einer solchen Tastatur auf einer Anzeigeeinrichtung kostet zuviel Anzeigefläche. Speziell bei zukünftigen Geräten mit sehr großen, flexiblen Displays, sogenannten "e-papers", will man ausserdem die Touch-Screen-Folie vermeiden, da sie die Flexibilität und die Lesbarkeit beeinträchtigen.

Für kürzere Texte, beispielsweise für eine E-Mail, kann man das für den Short-Message-Service (SMS) bewährte T9-Verfahren einsetzen. Auch hier gibt es aber das Problem, dass die Tasten auf der Frontfläche des Gerätes angeordnet sein sollten und damit Platz wegnehmen. Ein mobiles Endgerät mit einer Anzeigeeinrichtung in DIN-A4-Größe, so zum Beispiel eine elektronische Zeitung, muss ausserdem normalerweise mit beiden Händen gehalten werden, so dass die Tasten nur mit den Daumen bedient werden könnten.

Der Erfindung liegt die Aufgabe zugrunde, die Benutzbarkeit eines mobilen Endgerätes zu verbessern.

Diese Aufgabe wird erfindungsgemäß durch die im Patentanspruch 1 angegebenen Merkmale gelöst.

Im Folgenden wird die Erfindung anhand eines in der Zeichnung dargestellten Ausführungsbeispieles beschrieben.

Bei dem erfindungsgemäßen mobilen Endgerät werden zumindest einige der Tasten auf der Rückseite des Endgerätes angeordnet. So kann beispielsweise eine elektronische Zeitung bei beidhändigem Halten mit den hinteren Fingern bedient werden.

Bei einer kombinierten Anordnung von Tasten beziehungsweise Tastenfeldern auf der Vorder- und der Rückseite des mobilen Endgerätes kann man im Prinzip einen Zwölfertastenblock realisieren. Mit einem solchen Tastenblock kann man T9 schreiben.

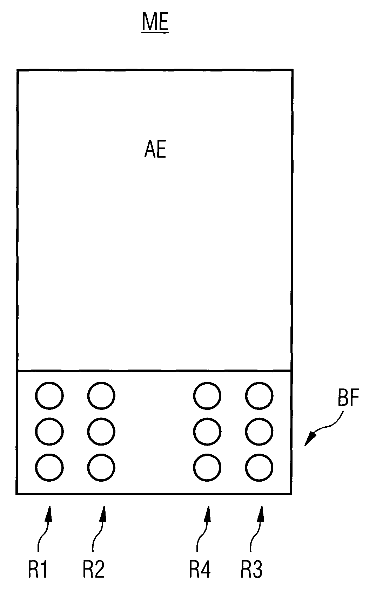

In der einzigen Figur 1 ist ein mobiles Endgerät ME dargestellt, das eine großflächige Anzeigeeinrichtung AE aufweist. Am beispielsweise unteren Ende der Anzeigeeinrichtung schließt sich ein Bedienfeld BF an.

Das Endgerät ME kann beispielsweise durch eine sogenannte elektronische Zeitung realisiert sein. Bei einer solchen elektronischen Zeitung kann die Anzeigeeinrichtung AE die Größe einer DIN-A4-Seite aufweisen. Die Anzeigeeinrichtung AE ist beispielsweise durch ein flexibles e-paper realisiert. Das Bedienfeld BF kann hierzu vergleichsweise als starr angesehen werden.

Das Bedienfeld BF weist beispielsweise vier Reihen R1 bis R4 von jeweils drei Tasten auf. Erfindungsgemäß sind hierbei die Reihen R1 und R3 auf der Frontseite des Endgerätes ME, und die Reihen R2 und R4 auf der Rückseite angeordnet. Die Position der rückseitigen Tasten, und bedarfsweise auch deren Bedeutung, sind auf der Frontseite des Bedienfeldes BF angegeben.

Die Bedienung der hinteren Tasten in den Reihen R2 und R4 erfolgt beispielsweise mit jeweils drei Fingern der beiden Hände, die beim Halten das Endgerät ME umgreifen. Für die Bedienung der frontseitigen Tasten in den Reihen R1 und R3 kann der Daumen verwendet werden. So ist gleichzeitig eine sichere Haltung des Endgerätes ME und eine Eingabe über die Tasten möglich.

Die Tasten in den Reihen R1 bis R4 können alphanumerische Eingabetasten, reine Wähltasten, oder beziehungsweise und Softkeys sein, deren jeweilige, kontextabhängige Bedeutung auf der Anzeigeeinrichtung AE beziehungsweise dem Display angegeben ist.

## Patentansprüche

1. Mobiles Endgerät (ME) mit einer Anzeigeeinrichtung (AE) und mit Eingabetasten (R1 bis R3),
**dadurch gekennzeichnet, dass** zumindest einige der Tasten (R2, R4) auf der Rückseite des Endgerätes (ME) in Bezug auf die Anzeigeeinrichtung (AE) angeordnet sind und
zumindest ihre Position auf der Vorderseite des Endgerätes (ME) sichtbar ist.

2. Endgerät (ME) nach Anspruch 1
**gekennzeichnet durch**
eine großflächig ausgebildete Anzeigeeinrichtung (AE).

3. Endgerät (ME) nach Anspruch 1 oder 2
**dadurch gekennzeichnet, dass**
die Anzeigeeinrichtung (AE) flexibel ausgebildet ist.
